**Europäisches Patentamt**

**European Patent Office**

**Office européen des brevets**

(19)

(11) Numéro de publication : **0 350 979 B1**

## FASCICULE DE BREVET EUROPEEN

(12)

(45) Date de publication du fascicule du brevet :
16.12.92 Bulletin 92/51

(51) Int. Cl.⁵ : **B68G 7/05**

(21) Numéro de dépôt : **89201584.3**

(22) Date de dépôt : **19.06.89**

(54) **Procédé et dispositif pour l'habillage d'un objet au moyen d'au moins une pièce souple.**

(30) Priorité : **13.07.88 FR 8809763**

(43) Date de publication de la demande :
**17.01.90 Bulletin 90/03**

(45) Mention de la délivrance du brevet :
**16.12.92 Bulletin 92/51**

(84) Etats contractants désignés :
**AT BE CH DE ES FR GB GR IT LI LU NL SE**

(56) Documents cités :
**EP-A- 0 223 312
US-A- 3 029 550
US-A- 3 428 973
US-A- 3 953 013**

(73) Titulaire : **Guilhem, Christian
Route Nationale 20
F-82350 Albias (FR)**

(72) Inventeur : **Guilhem, Christian
Route Nationale 20
F-82350 Albias (FR)**

(74) Mandataire : **Barre, Philippe
Cabinet Barre-Gatti-Laforgue 95 rue des
Amidonniers
F-31069 Toulouse Cédex (FR)**

## Description

L'invention concerne un procédé et un dispositif pour l'habillage d'un objet au moyen d'au moins une pièce souple. Elle s'applique en particulier pour réaliser des garnitures de siège composées d'un support rigide, d'une couche élastique de mousse et d'une housse de tissu.

Lorsqu'un objet doit être habillé d'une pièce souple devant épouser ses contours, il est généralement maintenu à l'aide de formes de maintien qui sont adaptées à l'objet à habiller. C'est par exemple le cas dans la demande de brevet européen n° 0 223 312 qui décrit l'habillage d'une garniture de siège. Le défaut essentiel des formes de maintien réside dans leur caractère spécifiquement adapté à un objet de dimensions et formes déterminées : le fabricant doit disposer d'autant de formes que de types d'objets à habiller. Il existe par ailleurs des procédés mécaniques de maintien, mais ceux-ci sont en général longs à mettre en oeuvre, se prêtent mal à une automatisation et sont inapplicables dans le cas d'un habillage complet de l'objet en raison de l'absence de zones appropriées pour la saisie de celui-ci.

La présente invention se propose d'indiquer un nouveau procédé d'habillage d'un objet et de fournir un dispositif de mise en oeuvre afin de pallier les défauts des procédés d'habillage connus.

Le procédé conforme à l'invention permettant d'habiller un objet au moyen d'une pièce souple consiste :

. à réaliser un lit fluidisé de particules recouvert d'une toile souple,

. à disposer la pièce souple au-dessus de la toile recouvrant le lit fluidisé,

. à disposer l'objet sur la pièce souple,

. à appliquer une pression sur ledit objet de façon à déformer la toile et la pièce souple et à enfoncer l'objet dans le lit fluidisé jusqu'à former une empreinte, la pièce souple venant s'appliquer sur les formes de l'objet et épouser celle-ci,

. et à fixer la pièce souple sur l'objet.

La fixation de la pièce souple sur l'objet peut être effectuée en gardant le lit à l'état fluidisé et en appliquant en permanence la pression sur l'objet. Il est également possible, après enfoncement de l'objet dans le lit fluidisé, d'arrêter la fluidisation des particules (en interrompant le flux de gaz qui engendre celle-ci) et une fois les particules immobilisées les unes contre les autres, d'interrompre l'application de la pression sur l'objet, lequel se trouve maintenu dans l'empreinte formée dans le lit (alors devenu un lit fixe) ; le cas échéant, après arrêt de la fluidisation, le lit peut être soumis à une aspiration en vue de bloquer les particules les unes par rapport aux autres.

Dans le cas où une série d'objets identiques est à habiller, il est possible de mettre en oeuvre le premier mode de façon répétitive pour chaque objet. Il est également possible d'effectuer l'habillage du premier objet par mise en oeuvre du second mode de mise en oeuvre, d'enlever ensuite ledit premier objet en gardant le lit à l'état fixe, et de disposer chaque objet suivant et sa pièce souple dans l'empreinte formée dans le lit fixe par le premier objet, en vue de fixer ladite pièce souple sur l'objet.

Le procédé de l'invention permet d'habiller des objets de formes quelconques sans avoir à réaliser au préalable, par moulage ou usinage, une forme de maintien pour chaque type d'objets. Un tel procédé est particulièrement intéressant lorsque l'habillage est à réaliser sur des objets susceptibles de posséder de nombreuses formes ou dimensions différentes.

Il est à noter que la fixation de la pièce souple peut être effectuée conformément à la demande de brevet européen n° 0 223 312, grâce à un fil de tension qui est disposé autour de ladite pièce souple et qui est tendu en fin d'opération pour plisser et resserrer les bords de celle-ci autour de l'objet.

Cette fixation peut également être effectuée par tout autre procédé : agrafage au dos de l'objet, collage... Un collage de la pièce souple sur les formes de l'objet peut être combiné au procédé de la demande précitée (qui permet de serrer les bords de ladite pièce à l'arrière de l'objet).

L'invention s'étend à un mode particulier de fixation consistant à prévoir un collage au moyen d'une colle thermo-activable, la colle étant activée grâce au flux de gaz de fluidisation lequel est chauffé à une température supérieure à la température d'activation de la colle.

L'objet à habiller peut être formé de plusieurs parties à assembler, en particulier un support rigide et une couche de mousse dans le cas d'une garniture de siège. Le procédé de l'invention avec collage par colle thermo-activable permet alors d'effectuer l'habillage et l'assemblage par collage en une seule opération grâce au flux de gaz chaud de fluidisation qui assure une activation de la colle.

L'invention s'étend à un dispositif d'habillage d'un objet au moyen d'au moins une pièce souple. Ce dispositif comprend en combinaison :

- une enceinte ouverte sur sa face supérieure équipée à sa base d'un système d'alimentation en gaz et d'un distributeur surmonté d'un lit de particules, en vue de la fluidisation dudit lit,
- une toile souple, disposée au-dessus du lit de particules et fixée à l'enceinte sur sa périphérie de façon à pouvoir subir des déformations,
- un organe de compression situé en regard de la face ouverte de l'enceinte et agencé pour pouvoir être soumis à un mouvement relatif d'écartement ou de rapprochement par rapport à ladite enceinte,
- des moyens de déplacement relatif de l'organe de compression par rapport à l'enceinte.

D'autres caractéristiques, buts et avantages de l'invention ressortiront de la description qui suit en référence aux dessins annexés, lesquels présentent des modes de réalisation du dispositif conforme à l'invention ; sur ces dessins :

- la figure 1 est une vue en coupe verticale par un plan axial dudit dispositif,
- la figure 2 en est une coupe à échelle plus grande montrant le lit à l'état fluidisé,
- les figures 3, 4, 5, 6 et 7 illustrent les étapes du procédé d'habillage,
- la figure 8 représente une variante du dispositif.

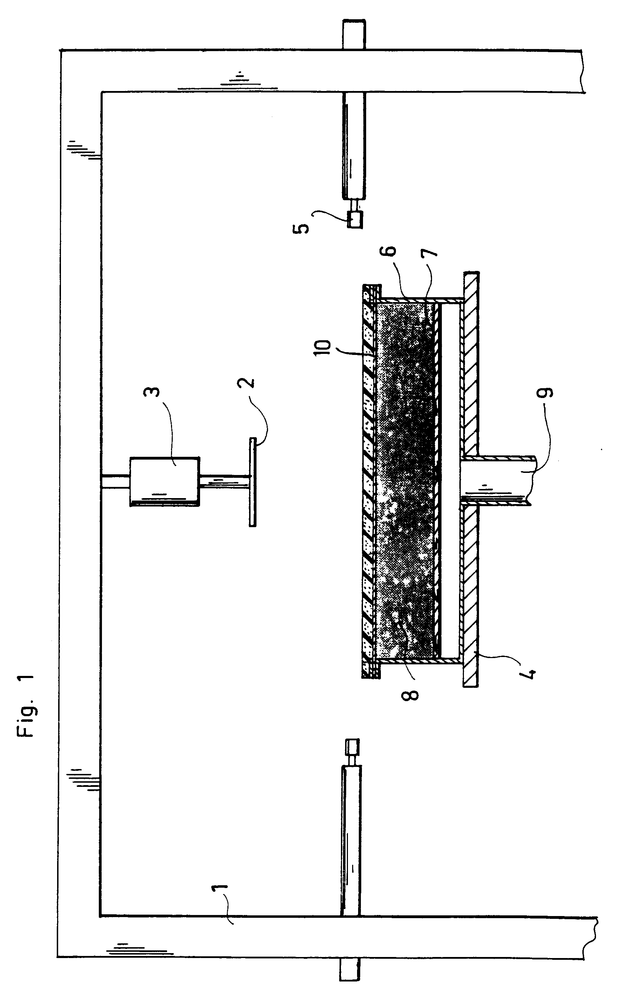

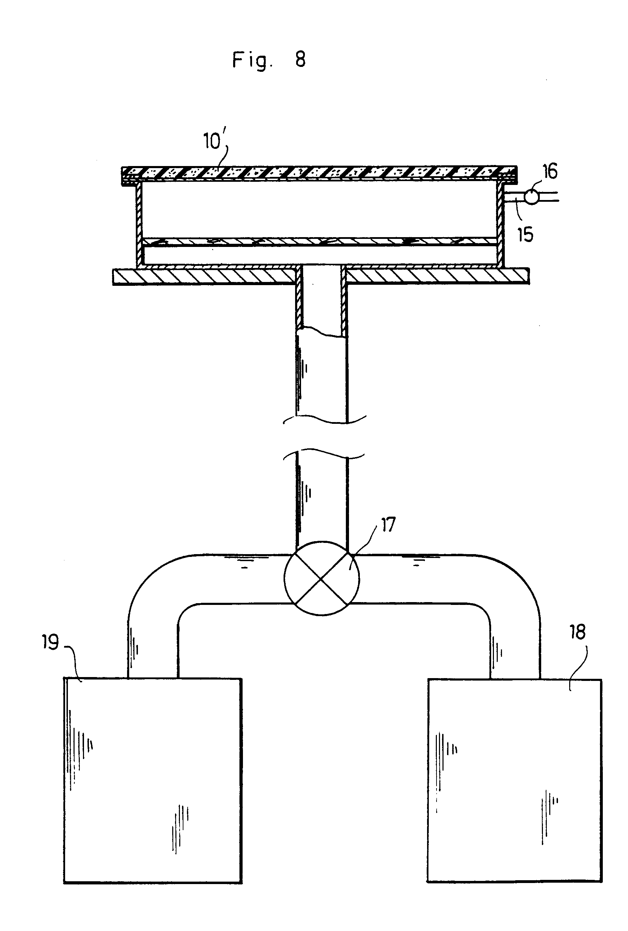

La presse représentée à titre d'exemple à la figure 1 est du type de celle visée aux figures 8 et 9 de la demande européenne n° 0 223 312 déjà évoquée. Elle est destinée à réaliser l'assemblage et l'habillage d'une garniture de siège. Ladite presse comprend les moyens généraux déjà décrits dans cette demande antérieure : bâti 1, organe de compression constitué par une plaque ou un croisillon 2, vérin 3 portant l'organe de compression 2 en vue de permettre de le déplacer verticalement, plateau 4 situé à l'aplomb de l'organe 2, griffes 5 pour assurer une traction sur les extrémités d'un fil de tension à l'arrière de la garniture (on se reportera à cette demande de brevet pour plus de détails sur ces organes et leur mise en oeuvre).

Conformément à la présente invention, le plateau 4 porte une enceinte 6 qui lui est solidarisée. Cette enceinte ouverte sur sa face supérieure contient vers sa partie basse un distributeur de fluidisation 7 constitué en l'exemple par une plaque microporeuse en bois aggloméré. Celle-ci est surmontée d'un lit de particules 8 composé d'une multitude de microbilles de verre ; le distributeur 7 peut être traversé par un flux d'air de fluidisation qui est délivré à travers le plateau 4 et la base de l'enceinte, par un conduit d'arrivée 9.

Les billes de verre ont une granulométrie comprise entre 75 et 150 microns et une densité comprise entre 2,3 et 2,8 (en l'exemple densité de 2,5). Le conduit 9 est relié à un système d'alimentation en air (non représenté) qui est associé à des moyens de chauffage du flux. En l'exemple ce système d'alimentation et le distributeur 7 sont adaptés pour permettre une distribution d'air dans l'enceinte à une vitesse linéaire comprise entre 1,5 Vmf et 6 Vmf (au niveau de la section droite de l'enceinte), où Vmf est la vitesse minimale de fluidisation des billes de verre (en l'exemple de l'ordre de 0,9 m/s).

Les moyens de chauffage de l'air peuvent être constitués par une résistance de puissance de l'ordre de 2 kilowatts, la soufflerie d'entraînement de l'air ayant un débit de l'ordre de 1,5 m$^3$/mn à une pression relative de 60 mb. Ce flux d'air peut ainsi être chauffé à une température de l'ordre de 80° à 100° C.

A la figure 1, le lit de particules est supposé au repos (en l'absence de distribution d'air). Il est surmonté d'une toile souple 10 qui est fixée à l'enceinte sur sa périphérie. Cette toile souple est poreuse de façon à laisser passer le flux d'air, tout en arrêtant les billes de verre. Cette toile peut être en un matériau synthétique tissé à fines mailles (ou formé par la combinaison de plusieurs nappes aérées).

En l'exemple la toile 10 est doublée d'une couche 11 de mousse hyper souple à cellules ouvertes, apte à épouser les formes de l'objet qui sera appliqué au-dessus de celle-ci. Cette mousse contribue à rabattre les bords de l'habillage.

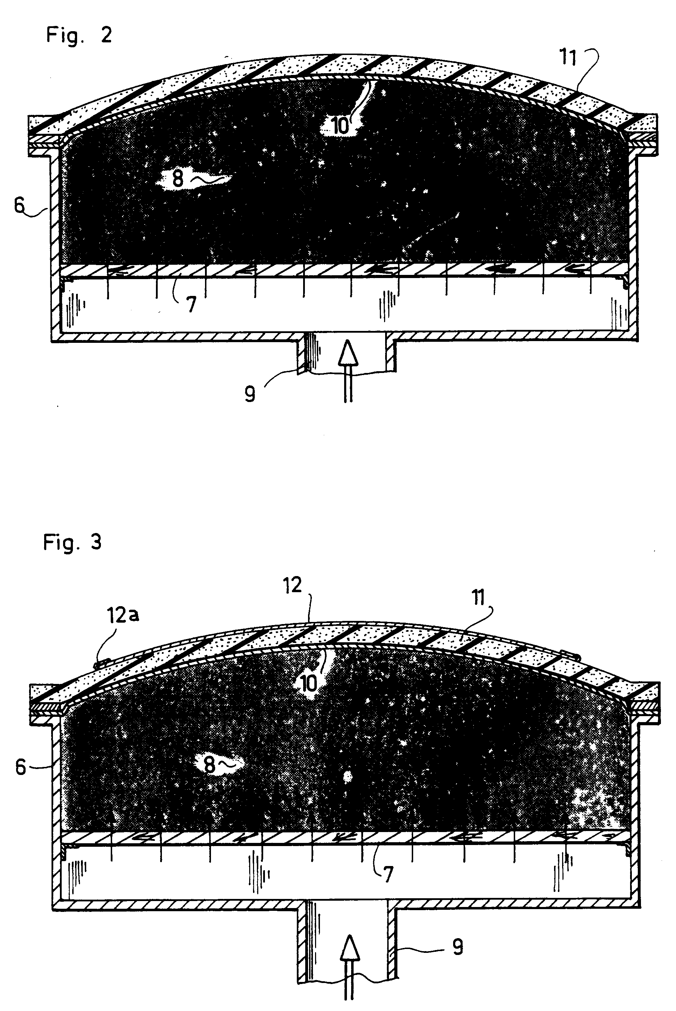

La figure 2 montre le lit de billes à l'état fluidisé lorsque l'air de fluidisation est délivré par le conduit 9. Le lit gonfle et présente un comportement équivalent à celui d'un lit liquide (mais compressible) de densité moyenne de l'ordre de 1,5.

Le procédé de l'invention débute par la mise en place au-dessus du lit d'une pièce de tissu 12 appelée à habiller la garniture de siège (figure 3). Cette pièce de tissu est découpée à la forme appropriée et peut être munie sur sa bordure 12a d'un fil de tension conformément à la demande EU 0 223 312.

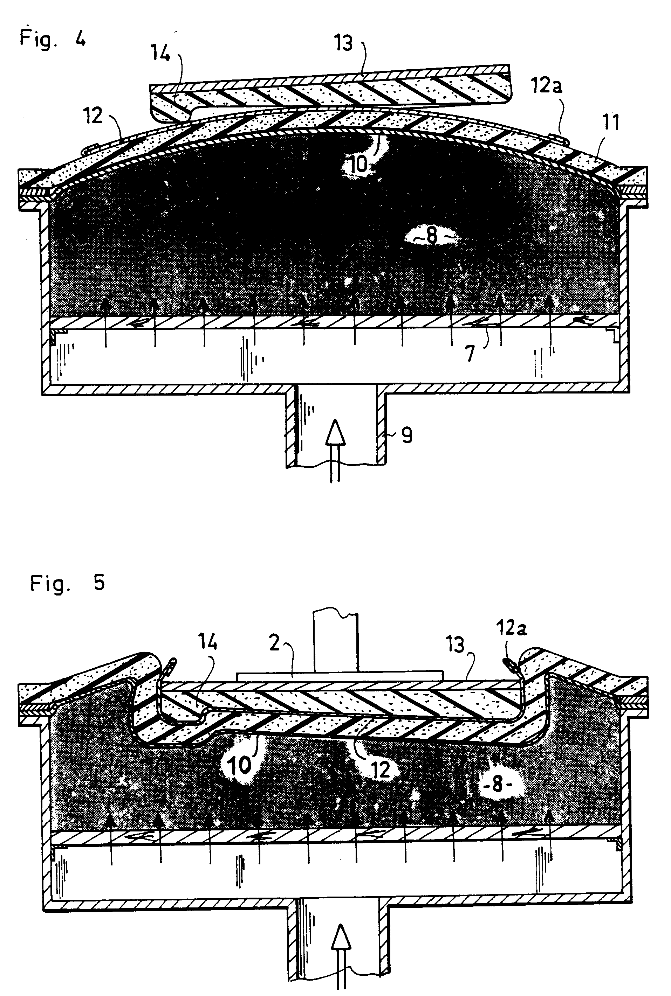

Les parties de la garniture sont ensuite disposées sur la pièce 12, en l'exemple support rigide 13 et couche de mousse 14 (figure 4). Préalablement les faces en regard, d'une part, de la pièce de tissu 12 et de la mousse 14, d'autre part, de ladite mousse 14 et du support 13, sont enduites de colle. On utilise une colle thermo-activable qui devient adhésive par chauffage vers 65° environ. Cette colle peut en particulier être une colle à base de polyuréthane du type "Chimiprène C-GEX".

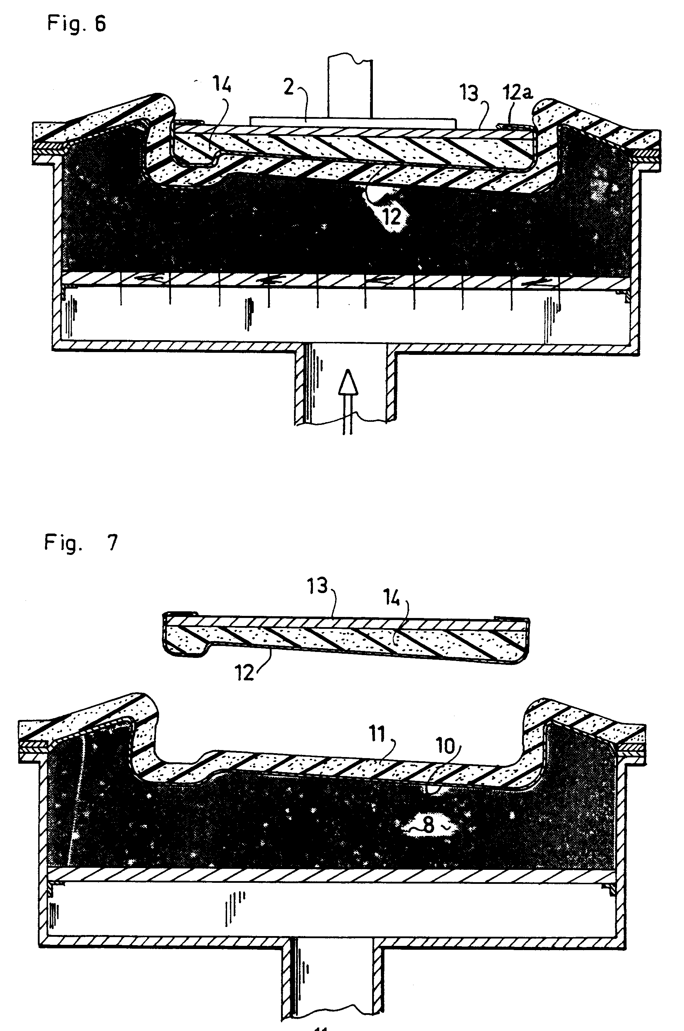

L'organe de compression 2 est ensuite déplacé verticalement pour enfoncer l'ensemble dans le lit fluidisé comme le montre la figure 5. La hauteur d'enfoncement est prévue pour amener l'habillage 12 à épouser parfaitement la forme de la mousse 14 et pour comprimer légèrement celle-ci de façon très uniforme. Dans cette position, l'ensemble se trouve stablement positionné.

La résistance de chauffage est mise en route et l'air chaud à 80-85° C active la colle ; une durée de chauffage de 15 à 30 secondes permet d'assurer cette réactivation.

Au cours de cette période, les extrémités du fil de tension qui court le long de la bordure 12a de la pièce de tissu 12 sont soumises à une traction et bloquées afin de replier et maintenir la pièce 12 à l'arrière de la garniture (figure 6).

L'objet terminé est enlevé en remontant l'organe de compression 2, un autre objet éventuellement de forme ou de dimension différente pouvant être immédiatement traité.

Il est à noter que l'air peut, le cas échéant, être interrompu avant d'enlever l'objet qui vient d'être terminé et, dans ce cas, le lit (devenu fixe ) conserve la forme de cet objet comme le représente la figure 7. Cette variante permet, le cas échéant, de positionner des objets identiques (en l'absence de distribution d'air) dans l'empreinte formée par un premier objet.

La figure 8 représente, en variante, un dispositif adapté pour permettre un blocage parfait des billes les unes par rapport aux autres de façon à éviter des déformations de cette empreinte dans le mode de mise en oeuvre sus-évoqué. La toile 10′ est dans ce cas prévue étanche et des moyens 15 d'évacuation du gaz distribué, équipés d'un robinet de fermeture 16, sont reliés à l'enceinte pour permettre l'échappement de l'air pendant les phases de distribution d'air (plusieurs conduits d'évacuation étant prévus autour de l'enceinte pour conserver un écoulement symétrique).

L'entrée de l'enceinte peut être branchée à travers une vanne 17, soit sur le système 18 d'alimentation en air, soit sur des moyens d'aspiration 19. Après interruption du système d'alimentation 18, le robinet 16 est fermé et la vanne 17 est branchée sur les moyens d'aspiration 19 qui sont mis en fonctionnement. Le lit de particules est ainsi soumis à une aspiration qui bloque les particules les unes par rapport aux autres et permet une meilleure prise d'empreinte du premier objet et une conservation plus stable de cette empreinte.

## Revendications

1. Procédé d'habillage d'un objet au moyen d'au moins une pièce souple, caractérisé en ce qu'il consiste :
   . à réaliser un lit fluidisé de particules (8) recouvert d'une toile souple (10),
   . à disposer la pièce souple (12) au-dessus de la toile recouvrant le lit fluidisé,
   . à disposer l'objet (13, 14) sur la pièce souple,
   . à appliquer une pression sur ledit objet de façon à déformer la toile et la pièce souple et à enfoncer l'objet dans le lit fluidisé jusqu'à former une empreinte, la pièce souple venant s'appliquer sur les formes de l'objet et épouser celle-ci,
   . et à fixer la pièce souple sur l'objet.

2. Procédé selon la revendication 1, caractérisé en ce que l'on garde le lit à l'état fluidisé avec application en permanence de la pression sur l'objet pendant la durée de fixation de la pièce souple sur ledit objet.

3. Procédé selon la revendication 1, caractérisé en ce que, après enfoncement de l'objet dans le lit fluidisé, l'on arrête la fluidisation et, après immobilisation des particules les unes contre les autres, l'on interrompt l'application de la pression sur l'objet, lequel est maintenu dans l'empreinte formée dans le lit pendant la durée de fixation de la pièce souple sur ledit objet.

4. Procédé selon la revendication 3, dans lequel, après arrêt de la fluidisation, l'on soumet le lit à une aspiration en vue de bloquer les particules les unes par rapport aux autres.

5. Procédé d'habillage successif d'une série d'objets identiques, dans lequel l'on habille le premier objet conformément à l'une des revendications 3 ou 4, l'on enlève ensuite ledit premier objet en gardant le lit à l'état fixe, et l'on dispose chaque objet suivant et sa pièce souple dans l'empreinte formée dans le lit fixe par le premier objet en vue de fixer ladite pièce souple sur l'objet.

6. Procédé selon l'une des revendications 1, 2, 3 ou 4, dans lequel on enduit de colle une au moins des faces en regard de la pièce souple et de l'objet de façon que la fixation s'effectue par collage après plaquage de la pièce souple contre l'objet.

7. Procédé selon la revendication 6, caractérisé en ce que .
   - l'on enduit préalablement la pièce souple (12) et/ou l'objet (13, 14) au moyen d'une colle thermo-activable,
   - l'on réalise le lit fluidisé au moyen d'un flux d'air chaud distribué à la base de celui-ci à une température supérieure à la température d'activation de la colle,
   - l'on laisse ensuite en place l'objet jusqu'à ce que la pièce souple soit collée sur celui-ci.

8. Procédé selon la revendication 7, dans lequel l'objet est une garniture de siège, composée d'un support rigide (13) et d'une couche de mousse (14), ledit procédé permettant d'assembler ces support et couche et de les recouvrir d'une pièce souple (12) et étant caractérisé en ce qu'il consiste :
   - à enduire de colle thermo-activable l'une au moins des faces en regard du support (13) et de la couche de mousse (14),
   - à enduire de colle thermo-activable l'une au moins des faces en regard de la pièce souple (12) et de la couche de mousse (14),
   - à disposer la pièce souple (12) au-dessus de la toile recouvrant le lit fluidisé, puis la couche de mousse (14) au contact de la pièce souple (12) et le support (13) au contact de la couche de mousse (14),
   - à appliquer une pression sur le support (13) de façon à enfoncer l'ensemble dans le lit fluidisé avec légère compression de la couche de mousse (14),
   - après activation de la colle, à retirer l'ensemble.

9. Dispositif pour l'habillage d'un objet, caractérisé en ce qu'il comprend, en combinaison :

- une enceinte ouverte sur sa face supérieure (6) équipée à sa base d'un système d'alimentation en gaz (9) et d'un distributeur (7) surmonté d'un lit de particules (8) en vue de la fluidisation dudit lit,
- une toile souple (10) disposée au-dessus du lit de partiules (8) et fixée à l'enceinte sur sa périphérie de façon à pouvoir subir des déformations,
- un organe de compression (2) situé en regard de la face ouverte de l'enceinte (6) et agencé pour pouvoir être soumis à un mouvement relatif d'écartement ou de rapprochement par rapport à ladite enceinte,
- des moyens (3) de déplacement relatif de l'organe de compression par rapport à l'enceinte.

10. Dispositif selon la revendication 9, dans lequel le lit de particules (8) est un lit de billes de granulométrie comprise entre 75 et 150 microns et densité comprise entre 2,3 et 2,8, le système d'alimentation en gaz (9) et le distributeur (7) étant adaptés pour permettre une distribution de gaz dans d'enceinte à une vitesse linéaire comprise entre 1,5 Vmf et 6 Vmf où Vmf est la vitesse minimale de fluidisation des billes.

11. Dispositif selon l'une des revendications 9 ou 10, caractérisé en ce que la toile souple (10) surmontant le lit de particules (8) est une toile poreuse, adaptée pour laisser passer le flux d'air, tout en arrêtant les billes.

12. Dispositif selon l'une des revendications 9, 10 ou 11, caractérisé en ce qu'il comprend des moyens de chauffage du flux d'air.

13. Dispositif selon l'une des revendications 9, 10 ou 12, comprenant une toile (10′) étanche, des moyens d'évacuation (15) du gaz distribué et des moyens d'aspiration (19) reliés à l'enceinte pour permettre de soumettre le lit de particules à une aspiration.

**Patentansprüche**

1. Verfahren zum Beziehen eines Gegenstandes mit mindestens einem flexiblen Bezugteil, dadurch gekennzeichnet, daß es in den folgenden Stufen besteht:
   . im Erzeugen eines Fließbettes von mit einem flexiblen Gewebe (10) abgedeckten Teilchen (8),
   . im Anordnen des flexiblen Bezugsteils (12) oberhalb des das Fließbett abdeckenden Gewebes,
   . im Anordnen des Gegenstandes (13, 14) auf dem flexiblen Bezugsteil,
   . im Ausüben eines Druckes auf den besagten Gegenstand, um das Gewebe und den flexiblen Bezugsteil zu verformen und im Einpressen des Gegenstandes in das Fließbett, bis ein Eindruck entsteht, wobei sich der flexible Bezugsteil an die Form des Gegenstandes anpaßt und diese annimmt,
   . und im Befestigen des flexiblen Bezugsteils an den Gegenstand.

2. Verfahren nach Anspruch 1, dadurch gekennzeichnet, daß man das Bett durch dauernde Ausübung des Druckes auf den Gegenstand, während der flexible Bezugsteil an dem besagten Gegenstand befestigt wird, im verflüssigten Zustand erhält.

3. Verfahren nach Anspruch 1, dadurch gekennzeichnet, daß man nach dem Einpressen des Gegenstandes in das Fließbett die Verflüssigung zum Stillstand bringt und nach Immobilisierung der Teilchen aneinander die Ausübung des Druckes auf den Gegenstand unterbricht, wobei der besagte Gegenstand während der Befestigung des flexiblen Bezugsteils an den besagten Gegenstand in dem Fließbett verbleibt.

4. Verfahren nach Anspruch 3, bei dem man, nachdem die Verflüssigung zum Stillstand gebracht wurde, das Bett einem Ansaugvorgang unterzieht, um die Teilchen im Verhältnis zueinander zu blockieren.

5. Verfahren zum Beziehen der Reihe nach einer Serie identischer Gegenstände, bei dem man den ersten Gegenstand nach einem der Ansprüche 3 oder 4 bezieht, den ersten Gegenstand entnimmt, wobei das Bett im festen Zustand erhalten wird, und jeden darauffolgenden Gegenstand und dessen flexiblen Bezugsteil in den durch den ersten Gegenstand in dem festen Bett gebildeten Eindruck legt, um den besagten flexiblen Bezugsteil an dem Gegenstand zu befestigen.

6. Verfahren nach einem der Ansprüche 1, 2, 3 oder 4, bei dem man mindestens eine der gegenüberliegenden Flächen des flexiblen Bezugsteils und des Gegenstandes mit Klebstoff beschichtet, um nach Auflegen des flexiblen Bezugsteils auf den Gegenstand die Befestigung durch Kleben zu bewirken.

7. Verfahren nach Anspruch 6, dadurch gekennzeichnet;
   - daß man flexiblen Bezugsteil (12) und/oder Gegenstand (13, 14) im voraus mit einem durch Wärme aktivierbaren Klebstoff beschichtet,
- daß man das Fließbett mit Hilfe eines Warmluftstroms erzeugt, der am Boden des besagten Fließbetts bei höherer Temperatur als der Klebstoffaktivierungstemperatur verteilt wird,
- daß man dann den Gegenstand an Ort und Stelle beläßt, bis der flexible Bezugsteil an diesem festhaftet.

8. Verfahren nach Anspruch 7, bei dem der Gegenstand eine Sitzeinheit ist, die sich aus einem steifen Träger (13) und einer Schaumstoffschicht (14) zusammensetzt, wobei das besagte Verfahren es ermöglicht, den besagten Träger und die besagte Schicht zu vereinigen und mit einem flexiblen Bezugsteil (12) zu beziehen, gekennzeichnet :
- im Beschichten mindestens einer der gegenüberliegenden Flächen des Trägers (13) und der Schaumstoffschicht (14) mit im warmen Zustand aktivierbaren Klebstoff,
- im Beschichten mindestens einer der gegenüberliegenden Flächen des flexiblen Bezugsteils (12) und der Schaumstoffschicht (14) mit dem im warmen Zustand aktivierbaren Klebstoff,
- im Anordnen des flexiblen Bezugsteils (12) oberhalb des das Fließbett abdeckenden Gewebes, worauf Schaumstoffschicht (14) in Berührung mit dem flexiblen Bezugsteil (12) und Träger (13) in Berührung mit Schaumstoffschicht (14) angeordnet werden,
- im Ausüben eines Druckes auf Träger (13), um die Einheit bei leichter Kompression der Schaumstoffschicht (14) in das Fließbett einzupressen,
- im Entnehmen der Einheit nach Aktivierung des Klebstoffs.

9. Gerät zum Beziehen eines Gegenstandes, dadurch gekennzeichnet, daß es gemeinsam folgende Teile umfaßt:
- ein an der Oberseite (6) offenes Gehäuse, das an dessen Boden mit einem Gaszufuhrsystem (9) und einem Verteiler (7) ausgestattet ist, der zur Verflüssigung eines darüber befindlichen Teilchenbettes (8) dient,
- ein flexibles Gewebe (10) oberhalb des Teilchenbetts (8), wobei das besagte Gewebe mit dem Gehäuse an dessen Umfang verbunden ist, so daß das besagte Gewebe Verformungen erfahren kann,
- eine Kompressionsvorrichtung (2) gegenüber der offenen Seite des Gehäuses (6), die so angeordnet ist, daß sie einer relativen Bewegung zum Entfernen von oder Annähern an das besagte Gehäuse unterzogen werden kann,
- Mittel (3) für relative Verlagerung der Kompressionsvorrichtung im Verhältnis zu dem Gehäuse.

10. Gerät nach Anspruch 9, bei dem Teilchenbett (8) ein Bett aus kugelförmigen Körpern granulometrischer Größe zwischen 75 und 150 Mikron und mit einer Dichte zwischen 2,3 und 2,8 ist, wobei Gaszufuhrsystem (9) und Verteiler (7) so beschaffen sind, daß sie die Verteilung von Gas innerhalb des Gehäuses mit einer linearen Geschwindigkeit zwischen 1,5 Vmf und 6 Vmf gestatten, und zwar ist Vmf die Mindestverflüssigungsgeschwindigkeit der kugelförmigen Körper.

11. Gerät nach einem der Ansprüche 9 oder 10, dadurch gekennzeichnet, daß flexibles Gewebe (10) oberhalb des Teilchenbetts (8) ein poröses Gewebe ist, das so beschaffen ist, daß es den Luftstrom durchläßt, die kugelförmigen Körper aber zurückhält.

12. Gerät nach einem der Ansprüche 9, 10 oder 11, dadurch gekennzeichnet, daß es Mittel zur Erwärmung des Luftstromes umfaßt.

13. Gerät nach einem der Ansprüche 9, 10 oder 12, umfassend ein dichtes Gewebe (10'), Mittel (15) zum Entfernen des verteilten Gases und Ansaugmittel (19), die mit dem Gehäuse in Verbindung stehen, so daß das Teilchenbett einem Ansaugvorgang unterzogen werden kann.

## Claims

1. Method for covering an object with a fabric by means of at least one flexible cover piece, characterised in that it consists:
. in producing a fluidised bed of particles (8) covered with a flexible fabric (10),
. in placing flexible cover piece (12) above the fabric covering the fluidised bed,
. in placing object (13, 14) on the flexible cover piece,
. in applying a pressure to said object so as to deform the fabric and the flexible cover piece and pressing the object into the fluidised bed so as to form an imprint, whereby the flexible cover piece comes to adjust itself to the shape of the object and matches the latter,
. and in attaching the flexible cover piece to the object.

2. Method according to claim 1, characterised in that the bed is maintained in the fluidised state by continually applying the pressure to the object while the flexible cover piece is being attached to said object.

3. Method according to claim 1, characterised in that, after pressing the object into the fluidised bed, one discontinues the fluidisation and, after immobilisation of the particles against one another, ceases to apply the pressure to the object, which is kept within the imprint formed in the bed while the flexible cover piece is attached to said object.

4. Method according to claim 3, in which, after discontinuing the fluidisation, one subjects the bed to aspiration in order to block particles in relation to one another.

5. Method for successive covering of a series of identical objects, according to which the first object is covered in accordance with one of claims 3 or 4, whereupon said first object is removed while maintaining the bed in its fixed state and each subsequent object and its flexible cover piece are placed within the imprint formed in the fixed bed by the first object, so as to attach said flexible cover piece to the object.

6. Method according to one of claims 1, 2, 3 or 4, according to which one coats at least one of the opposing faces of the flexible cover piece and the object with adhesive, with a view to bringing about the attachment by bonding after applying the flexible cover piece to the object.

7. Method according to claim 6, characterised in that :
   - flexible cover piece (12) and/or object (13) is/are first coated with a heat-activable adhesive,
   - the fluidised bed is produced with the aid of a hot air flow distributed at the base of said bed at a temperature higher than the activation temperature of the adhesive,
   - the object is then left in position until the flexible cover piece is bonded with that object.

8. Method according to claim 7 according to which the object is a seat unit consisting of a rigid support (13) and a foam layer (14), said method making it possible to assemble this support and this layer and to cover them with a flexible cover piece (12) and characterised in that it consists :
   - in coating at least one of the opposite faces of support (13) and of foam layer (14),
   - in coating at least one of the opposite faces of flexible cover piece (12) and foam layer (14) with heat activable adhesive,

   - in placing flexible cover piece (12) above the fabric covering the fluidised bed, followed by foam layer (14) in contact with flexible cover piece (12) and support (13) in contact with foam layer (14),
   - in applying a pressure to support (13) so as to press the assembly into the fluidised bed while slightly compressing foam layer (14),
   - in withdrawing the assembly after activation of the adhesive.

9. Apparatus for covering an object with fabric, characterised in that it comprises in combination:
   - a casing (6) open at the top, which is equipped at its base with a gas feed system (9) and a distributor (7) above which is a bed of particles (8), with a view to fluidising said bed,
   - a flexible fabric (10) placed above particle bed (8) and secured to the casing at the periphery of the latter so as to be capable of undergoing deformations,
   - a compression device (2) situated opposite the opened top of casing (6) and so arranged as to be capable of being subjected to a relative movement of separation or approach in relation to said casing,
   - means (3) for relative displacement of the compression device in relation to the casing.

10. Apparatus according to claim 9 in which particle bed (8) is a bed of spherical bodies, the granular metric size of which amounts to between 75 and 150 microns and the density of which amounts to between 2.3 and 2.8, whereby gas feed system (9) and distributor (7) are so designed as to enable distribution of the gas within the casing at a linear rate comprised between 1.5 Vmf and 6 Vmf, Vmf being the minimum rate of fluidisation of the spherical bodies.

11. Apparatus according to one of claims 9 or 10, characterised in that flexible fabric (10) above particle bed (8) is a porous fabric so designed as to allow the air flow to pass while retaining the spherical bodies.

12. Apparatus according to one of claims 9, 10 or 11, characterised in that it comprises means for heating the air flow.

13. Apparatus according to one of claims 9, 10 or 12, comprising a sealed fabric (10'), means for evacuating (15) the gas distributed and aspiration means (19) connected with the casing so as to enable the particle bed to be subjected to aspiration.

Fig. 1

EP 0 350 979 B1

Fig. 2

Fig. 3

Fig. 4

Fig. 5

Fig. 6

Fig. 7

Fig. 8